# EUROPÄISCHE PATENTSCHRIFT

(11) **EP 1 499 794 B1**
(45) Veröffentlichungstag und Bekanntmachung des Hinweises auf die Patenterteilung: **13.08.2008**
(21) Anmeldenummer: 03718730.9
(22) Anmeldetag: 04.04.2003
(51) Int. Cl.: F01M 11/00, F16N 39/00

(54) **TRENNEINRICHTUNG IN EINEM OELKREISLAUF EINES KRAFTFAHRZEUGES**
SEPARATING DEVICE IN AN OIL CIRCUIT OF A MOTOR VEHICLE
DISPOSITIF DE SEPARATION DANS LE CIRCUIT D'HUILE D'UNE AUTOMOBILE

(30) Priorität: 30.04.2002 DE 10219279
(43) Veröffentlichungstag der Anmeldung: 26.01.2005
(73) Patentinhaber: Bayerische Motoren Werke Aktiengesellschaft, 80809 München (DE)
(72) Erfinder: BEIER, Gerhard, 82377 Penzberg (DE)
(86) Internationale Anmeldenummer: PCT/EP2003/003508
(87) Internationale Veröffentlichungsnummer: WO 2003/093656

(56) Entgegenhaltungen:
- EP-A- 0 284 727
- DE-A- 1 903 295
- DE-A- 2 005 594
- DE-A- 2 201 877
- PATENT ABSTRACTS OF JAPAN vol. 015, no. 279 (M-1136), 16. Juli 1991 (1991-07-16) & JP 03 096610 A (NISSAN MOTOR CO LTD), 22. April 1991 (1991-04-22)

## Beschreibung

Die Erfindung betrifft eine Trenneinrichtung in einem Ölkreislauf eines Kraftfahrzeuges, umfassend eine druckerzeugende Ölpumpe sowie einen Öltank, zum Trennen eines gasbeladenen Ölstromes in einen luftarmen und einen lufthaltigen Teilstrom, mit einer gekrümmten Führungsrippe, mittels welcher ein auf ihrer Innenseite tangential eingeleiteter Ölstrahl umgelenkt/in Drall versetzt wird.

Insbesondere im Kraftfahrzeugbereich wird Öl zur Kühlung und/oder als Schmiermittel in der Regel in einem Kreislauf zirkulierend verwendet. Dabei wird Öl ausgehend von einem Ölbehälter/-tank mittels einer Ölpumpe über Zuleitungen zum Wirkungsort und über Rücklaufleitungen wieder zurück in der Tank gefördert, wobei die Pumpe(n) entweder zwischen Tank und Wirkungsort und/oder zwischen Wirkungsort und Tank angeordnet sein kann/können. Da neben Öl im Kreislauf normalerweise auch Luft vorhanden ist, ist aufgrund der (Umwälz-)Bewegung eine Beladung des flüssigen Öls mit gasförmiger Luft unvermeidlich, so dass das Öl mehr oder weniger stark aufschäumt.

Luftbeladenes Öl ist in seiner Wirkung bezüglich Schmierung und/oder Wärmetransportfähigkeit stark eingeschränkt, was zufolge hat, dass erhöhter Verschleiß und somit eine verkürzte Lebensdauer beispielsweise einer Brennkraftmaschine eintreten. Aus diesem Grund versucht man einerseits durch eine entsprechende Ölbewegung eine Beladung des Öls mit Luft zu verhindern, zudem werden Öle eingesetzt, welche eine geringe Schaumneigung besitzen, andererseits ist es dennoch notwendig, aufgeschäumtes luftbeladenes Öl wieder zu entgasen.

In diesem Zusammenhang sind zur Bereitstellung von luftfreiem Öl verschiedene Verfahren und Vorrichtungen bekannt geworden. Die DE 36 23 238 C2 beispielsweise beschreibt eine Vorrichtung zur Bereitstellung von im wesentlichen luftfreiem Schmieröl, wobei als zentrales Trennelement ein sogenannter Zyklonabscheider verwendet wird. Gemäß der DE 36 23 238 C2 wird das Luftbeladene Öl über eine Eintrittsöffnung in den Zyklonabscheider eingeleitet, unter Nutzung eines Teils der Öldruckenergie erfolgt eine Trennung in einen unten bzw. peripher austretenden luftarmen und einen oben bzw. zentral austretenden lufthaltigen Teilstrom.

Derartige Luftabscheider sind prinzipiell bekannt, jedoch bilden sie ein eigenes Bauelement, welches Bauraum beansprucht und einen gewissen Herstellungs- und Montageaufwand bedingt.

In diesem Zusammenhand wird auf die DE 1 903 295 A1 sowie die DE 2 005 594 A1 verwiesen, welche Anordnungen gemäß dem Oberbegriff des Anspruches 1 zeigen. Der Luftabscheider ist jeweils als eigenständiges, sehr aufwändiges Bauteil mit einer Vielzahl von Einzelelementen ausgestaltet und mit großem Aufwand im Inneren des Öltanks befestigt.

Der DE 1 903 295 A1 zufolge sind Verbindungsrippen zur Verbindung der Glocke mit dem Vorratsbehälter ebenso notwendig, wie eine separate Durchführung der Rücklaufleitung durch die Wand des Vorratsbehälters. Entsprechend der DE 2 005 594 A1 ist die Glocke der gesondert ausgebildeten Entschäumvorrichtung aufwändig an einem abnehmbaren Deckel einer Wandung des Vorratsbehälters durch die Schraube befestigt und demnach nicht integriert. Ferner ist auch eine von der Entschäumvorrichtung getrennte Durchführung der Rücklaufleitung notwendig.

Der Erfindung liegt daher die Aufgabe zugrunde, in einem eingangs genannten Ölkreislauf mit geringem Herstellung- und Kostenaufwand sowie unter Bauraumgesichtspunkten günstig eine Trenneinrichtung zum Abscheiden von Luft aus Öl bereitzustellen.

Erfindungsgemäß wird die Aufgabe durch eine Trenneinrichtung mit den Merkmalen des Anspruchs 1 gelöst, wobei gemäß der zugrundeliegenden Idee die Trenneinrichtung integraler Bestandteil des Öltanks ist.

Gemäß eines besonders bevorzugten Ausführungsbeispiels der Erfindung ist bei einer Trenneinrichtung deren Öltank einen Behälter sowie einen als Oberschale ausgebildeten Deckel umfasst, zur Ausbildung der Trenneinrichtung der Deckel selbst entsprechend ausgestaltet. Zweckmäßigerweise ist der Deckel der Trenneinrichtung dabei aus einem Kunststoff, wie Polyamid, hergestellt.

Besonders von Vorteil ist es, wenn der eingeleitete Ölstrahl mittels einer entsprechend gestalteten Einleiteinrichtung flach ausgebildet ist, so dass ein breiter Bereich der Führungsrippe beaufschlagt wird.

Als sehr zweckmäßig hat sich herausgestellt, wenn der luftarme Teilstrom nach unten bzw. peripher und der lufthaltige Teilstrom nach oben bzw. zentral abgeführt wird, dabei ist zur Rückführung des lufthaltigen Teilstromes radial innerhalb konzentrisch zur Führungsrippe ein ins Tankinnere ragender, nach unten offener Dom vorgesehen, welcher eine Abführung aus einem verwirbelungsarmen, luftbewegungsberuhigten Raum ermöglicht.

Aufgrund der sehr kompakten Bauweise der Trenneinrichtung ist diese besonders geeignet, in Verbindung mit einem Öltank insbesondere bei einem Kraftrad Verwendung zu finden.

Nachfolgend ist ein besonders zu bevorzugendes Ausführungsbeispiel der Erfindung unter Bezugnahme auf Figuren näher erläutert, dabei zeigen
- Figur 1: einen Öltank umfassend eine Trenneinrichtung,
- Figur 2a: eine Oberschale eines Öltanks umfassend eine Trenneinrichtung in Draufsicht, sowie
- Figur 2b: eine Oberschale eines Öltanks umfassend eine Trenneinrichtung von unten.

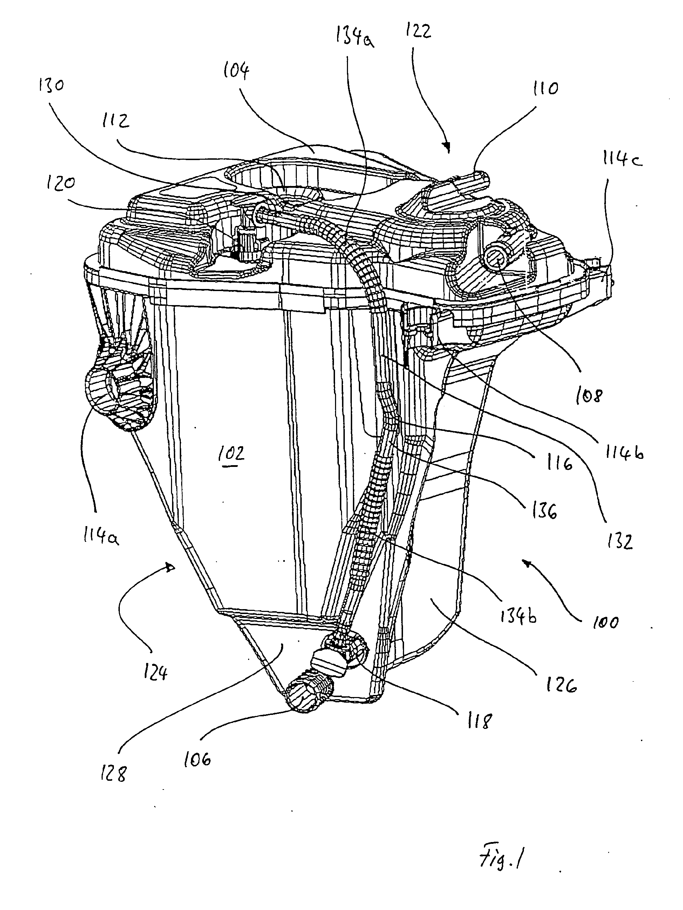

Figur 1 zeigt einen aus einem Behälter 102 sowie einem Deckel 104 bestehenden mehrteiligen Öltank 100, der Öltank dient als Behälter für eine Trockensumpfschmierung insbesondere bei Krafträdern zur Bereitstellung des Ölvolumens. Vorliegend bestehen sowohl Behälter 102 als auch Deckel 104 des gezeigten Öltanks 100 aus spritzgegossenem glasfaserverstärktem Polyamid (PA), die Tankteile 102, 104 sind öldicht miteinander verbunden. Die zur Versteifung der Konstruktion notwendigen Versteifungsrippen sind innenliegend angeordnet, so dass die Tankaußenfläche bombiert mit Radien zwischen 250 und 500mm ausgebildet ist, die Hauptkanten sind mit Radien von ca. 8mm gerundet. Vorliegend umfasst der Öltank 100 zur Verwendung in einem Kraftrad ein Ölvolumen von etwa 3,251 zuzüglich 11 entsprechend 25-30% Luftvolumen.

Im unteren Bereich des Behälters 102 ist ein Ölablauf 106 vorgesehen, über welchen im Betrieb mittels einer zwischen Ölablauf 106 und einem im Deckel 104 vorgesehenen Ölzulauf 108 im Ölkreislauf angeordneten Förderpumpe Öl zum Wirkungsort beispielsweise zur Schmierung und/oder Kühlung einer Brennkraftmaschine gefördert wird. Ebenfalls im Ölkreislauf ist beispielsweise stromaufwärts des Ölzulaufes 106 ist - nicht dargestellt - ein Ölkühler vorgesehen. Nicht zuletzt durch die hier nicht näher gezeigte Förderpumpe erfolgt eine Beladung des Öls mit Luft, weshalb im Bereich des Ölzulaufes 108 ist eine Trennvorrichtung 122 zur Entgasung des aufgeschäumten Öls vorgesehen ist; die abgetrennten Gase werden über einen Luftabführstutzen 110 abgeführt. Ebenfalls im Deckel 104 integriert ist eine Öleinfüllöffnung 112.

Zwei Öffnungen 120 im oberen und 118 im unteren Bereich des Öltanks sind mittels eines Schlauches 116 miteinander verbunden, so dass der Schlauch 116 ein mit dem Tankvolumen kommunizierendes Gefäß bildet. Der Schlauch 116 besteht im dargestellten Ausführungsbeispiel aus Abschnitten 134a, 134b aus einem ölbeständigen Elastomerverbundschlauch sowie aus einem durchsichtigen PTFE-Rohr 136, in dessen nähe der Schlauch 116 mit einer Schelle 132 oder eingeclipst am Tank 100 gehalten ist. Im Bereich des durchsichtigen Rohres 136 sind Markierungen zur Kennzeichnung des minimalen bzw. maximalen Ölstandes vorgesehen, die Markierungen sind entweder am Rohr 136 selbst - wobei die Gefahr einer fehlerhaften Anzeige aufgrund ungenauer Montage des Schlauches 116 besteht - oder am Tank angebracht sind. Auf diese Weise wird eine besonders komfortable Kontrolle des Ölstandes ohne Verwendung eines Peilstabes oder Ähnlichem ermöglicht. Im Bereich der oberen Öffnung 120 weist der Schlauch 116 eine Schnellkupplung zur Verbindung mit dem Deckel 104 auf, der Schlauch kann so an seinem Oberen Ende gelöst werden und dient als Entleerungsschlauch, - in diesem Zusammenhang ist es zweckmäßig, die untere Öffnung 118 an einem sehr tiefen, vorzugsweise am tiefsten Punkt des Öltanks 100 vorzusehen. Mittels des Entleerungsschlauches wird ein besonders servicefreundliches einfaches und sauberes Entleeren des Öltanks 100 in eine Ölsammelbehältnis ermöglicht ohne dass die Gefahr des Verschüttens von Öl besteht.

Zur Befestigung des Öltanks 100 an einem hier nicht näher gezeigten Kraftrad sind Befestigungsstellen 114a, 114b, 114c vorgesehen, wobei der vorliegend gezeigte Öltank 100 so am Fahrzeug befestigt ist, dass die Rückseite 124 dem Hinterrad zu- und die Seite 126 nach vorne gewandt ist. Die Seite 128 ist seitlich des Kraftrades sichtbar, so dass eine Überprüfung des Ölstandes sowie ein Entleeren wie beschrieben vorteilhaft ermöglicht werden.

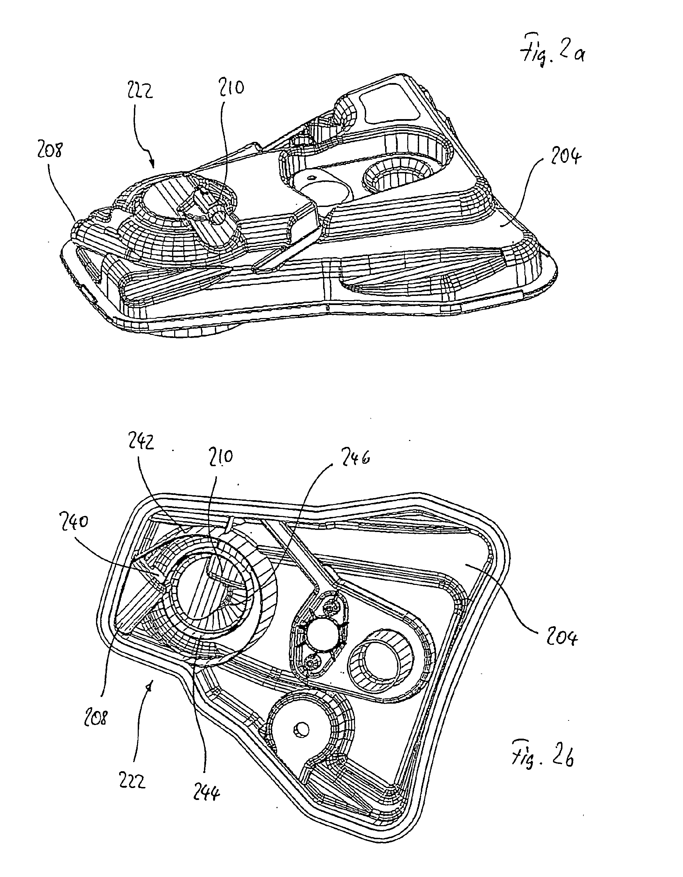

Eine Oberschale 204 eines Öltanks umfassend eine Trenneinrichtung 222 in Draufsicht ist in Figur 2a dargestellt, eine Ansicht von unten zeigt Figur 2b. Die Trenneinrichtung 222 zur Abtrennung von Gasen aus dem luftbeladenen Öl ist im Deckel 204 des Öltanks integriert, indem eine entsprechende Ausbildung des Deckels 204 bei der Herstellung im Spritzgießprozess erfolgt. Zur Einleitung des gasbeladenen Öls ist ein Öleinlassstutzen 208 vorgesehen, welcher im Einlassbereich 240 flachdüsenartig ausgebildet ist, so dass der eingeleitete Ölstrahl aufgefächert und eine verbesserte Freisetzung der enthaltenen Luftblasen bewirkt wird. Der aufgefächerte Ölstrahl wird entsprechend seiner Auffächerung nahezu über deren gesamte Breite tangential auf eine Führungsrippe 242 geleitet, welche in ihrem weiteren Verlauf dem Ölstrom folgend nach innen gekrümmt ist. Der Ölstrom wird auf diese Weise umgelenkt und es treten Zentrifugalkräfte auf, welche eine Trennung der Luft vom Öl bewirken. Radial innerhalb der Führungsrippe 242 ist mittels einer ringförmigen Rippe 244 ein Dom 246 zur Bildung eines Raumes mit geringer Luftbewegung vorgesehen, aus welchem die Abführung der abgetrennten Luft ohne nennenswerte Verwirbelungen nach oben/zentral erfolgt. Das nun luftfreie Öl wird nach unten/peripher abgeführt und steht zur weiteren Verwendung im Ölkreislauf zur Verfügung.

Der erfindungsgemäße Öltank 100 zeichnet sich weiterhin durch sein besonders geringes Gewicht aus, die optimierte Abscheidung von Luft aus dem Ölkreislauf trägt zur einer erheblichen Verminderung des Verschleißes der Brennkraftmaschine bei.

## Patentansprüche

1. Trenneinrichtung in einem Ölkreislauf eines Kraftfahrzeuges, umfassend eine druckerzeugende Ölpumpe sowie einen Öltank, zum Trennen eines gasbeladenen Ölstromes in einen luftarmen und einen lufthaltigen Teilstrom, mit einer gekrümmten Führungsrippe, mittels welcher ein auf ihrer Innenseite tangential eingeleiteter Ölstrahl umgelenkt/in Drall versetzt wird, **dadurch gekennzeichnet, dass** die Trenneinrichtung (122, 222) integraler Bestandteil des Öltanks ist.

2. Trenneinrichtung nach Anspruch 1, wobei der Öltank einen Behälter sowie einen als Oberschale ausgebildeten Deckel umfasst, **dadurch gekennzeichnet, dass** zur Ausbildung der Trenneinrichtung (122, 222) der Deckel (104, 204) selbst entsprechend ausgestaltet ist.

3. Trenneinrichtung nach Anspruch 2, **dadurch gekennzeichnet, dass** der Deckel aus einem Kunststoff, wie Polyamid, hergestellt ist.

4. Trenneinrichtung nach einem der Ansprüche 1 bis 3, **dadurch gekennzeichnet, dass** der eingeleitete Ölstrahl mittels einer entsprechend gestalteten Einleiteinrichtung (240) flach ausgebildet ist.

5. Trenneinrichtung nach einem der Ansprüche 1 bis 4, **dadurch gekennzeichnet, dass** der luftarme Teilstrom nach unten bzw. peripher und der lufthaltige Teilstrom nach oben bzw. zentral abgeführt wird.

6. Trenneinrichtung nach Anspruch 5, **dadurch gekennzeichnet, dass** der lufthaltige Teilstrom über einen radial innerhalb, konzentrisch zur Führungsrippe (242) angeordneten, durch eine ringförmige Rippe (244) gebildeten Dom (246) rückgeführt wird.

## Claims

1. A separating device in an oil circuit of a motor vehicle, comprising a pressure-generating oil pump and an oil tank, for dividing a gas-laden oil stream into an air-depleted part and an air-containing part and comprising a curved guide rib whereby an oil jet introduced tangentially on its inside is deflected or spun, **characterised in that** the separating device (122, 222) is an integral component of the oil tank.

2. A separating device according to claim 1, wherein the oil tank comprises a container and a cover forming an upper shell, **characterised in that** the cover (104, 204) itself is suitably designed for forming the separating device (122, 222).

3. A separating device according to claim 2, **characterised in that** the cover is made of a plastics material such as polyamide.

4. A separating device according to any of claims 1 to 3, **characterised in that** the introduced oil jet is flattened by a suitably shaped introducing or feed device (240).

5. A separating device according to any of claims 1 to 4, **characterised in that** the air-depleted part stream is discharged downwards or peripherally and the air-containing part stream is discharged upwardly or centrally.

6. A separating device according to claim 5, **characterised in that** the air-containing part stream is recycled by a dome (246) in the form of an annular rib (244) disposed radially inside and concentric with the guide rib (242).

## Revendications

1. Installation de séparation pour un circuit d'huile d'un véhicule automobile comprenant une pompe à huile générant de la pression ainsi qu'un réservoir d'huile pour séparer une veine d'huile chargée en gaz en une veine partielle, faiblement chargée en air et une veine partielle chargée en air, ainsi qu'une nervure de guidage, cintrée, à l'aide de laquelle on dévie ou on fait tourner le jet d'huile qui arrive tangentiellement sur son côté intérieur,
**caractérisée en ce que**
l'installation de séparation (122, 222) fait partie intégrante du réservoir d'huile.

2. Installation de séparation selon la revendication 1 dans laquelle le réservoir d'huile comporte un réservoir ainsi qu'un couvercle en forme de coupelle,
**caractérisée en ce que** le couvercle (104, 204) est réalisé de façon à constituer l'installation de séparation (122, 222).

3. Installation de séparation selon la revendication 2,
**caractérisée en ce que**
le couvercle est fabriqué en matière plastique, notamment en polyamide.

4. Installation de séparation selon l'une des revendications 1 à 3,
**caractérisée en ce qu'**
une installation de guidage (240) de forme appropriée donne une forme plate au jet d'huile entrant.

5. Installation de séparation selon l'une des revendications 1 à 4,
**caractérisée en ce que**
la veine partielle faiblement chargée en air est évacuée vers le bas ou de façon périphérique et la veine partielle contenant de l'air est évacuée vers le haut, c'est-à-dire dans la direction centrale.

6. Installation de séparation selon la revendication 5,
**caractérisée en ce que**
la veine partielle chargée en air est reconduite par-dessus un dôme (246) en forme de nervure annulaire (244) situé radialement à l'intérieur et concentriquement à la nervure de guidage (242).
